# EUROPÄISCHE PATENTSCHRIFT

(11) **EP 2 595 474 B1**
(45) Veröffentlichungstag und Bekanntmachung des Hinweises auf die Patenterteilung: **18.04.2018**
(21) Anmeldenummer: 11736330.9
(22) Anmeldetag: 17.07.2011
(51) Int. Cl.: A01J 15/16, A01J 15/26

(54) **VORRICHTUNG ZUR HERSTELLUNG VON BUTTER**
DEVICE FOR PRODUCING BUTTER
DISPOSITIF DE FABRICATION DE BEURRE

(30) Priorität: 21.07.2010 DE 102010031706
(43) Veröffentlichungstag der Anmeldung: 29.05.2013
(73) Patentinhaber: GEA Mechanical Equipment GmbH, 59302 Oelde (DE)
(72) Erfinder: HINZE, Heinz, 59269 Beckum (DE); KLAPPER, Siegfried, 33442 Herzebrock-Clarholz (DE); FRIEDRICH, Lutz, 06567 Rottleben (DE)
(74) Vertreter: Specht, Peter
(86) Internationale Anmeldenummer: PCT/EP2011/062185
(87) Internationale Veröffentlichungsnummer: WO 2012/010529

(56) Entgegenhaltungen:
- DE-A1- 3 039 807
- DE-C1- 3 529 677
- FR-A1- 2 493 100
- GB-A- 111 366
- SU-A1- 286 682
- SU-A2- 380 036

## Beschreibung

Die Erfindung betrifft eine Vorrichtung nach dem Oberbegriff des Anspruchs 1.

Im Bereich der industriellen Butterungsverfahren hat sich die kontinuierliche Butterung mit einer Maschine nach Dr. Fritz aus dem Jahr 1941 durchgesetzt. Durch diese Maschine und das entsprechende Verfahren wurde eine gute und gleichmäßige Qualität der Butter bei geringen Fettverlusten sichergestellt. Mit dem Fritz/Eisenreich - Verfahren können die Arbeitsschritte der Butterbildung, der Nachbutterung, des Abtrennens der Buttermilch, des Knetens der Butter und des Einmischens von Zusätzen weitestgehend automatisiert werden. Dabei werden die Prozesse der Butterung und der Nachbutterung von Butterungszylindern und sowohl das Abtrennen der Buttermilch als auch das Kneten der Buttermasse von Abpressern mit motorisierten Schneckenantrieben gewährleistet.

Bei der Butterung erfolgt die Umwandlung des zugeführten Rahms in Butterkorn und Buttermilch. Diese Umwandlung einer Fett in Serum Emulsion in eine Serum in Fett Emulsion erfolgt, indem die Membranhülle der Fettkugeln im Rahm durch Scherkräfte eines Schlägers in einem Butterungszylinder zerstört werden und das Fett im Anschluss daran zu Butterkorn agglomerieren kann. Das Serum, also die Buttermilch, wird in den darauf folgenden Bearbeitungsstufen abgetrennt. Beispielhaft sei insofern auf den Stand der Technik der FR 2 493 100 A1 verwiesen.

Eine weitere Vorrichtung zur Herstellung von Butter aus Rahm offenbart die gattungsgemäße SU 286 682 A1. Nach dieser Schrift ist der Nachbutterungszylinder als Siebmantel ausgebildet und weist keinen Nachbutterungsbereich auf. Die Konstruktion ist hinsichtlich des benötigten Bauraumes und der Herstellkosten sowie der erreichbaren Qualität weiter zu optimieren.

Die Erfindung setzt, ausgehend von dem bekannten gattungsgemäßen Stand der Technik, bei der Aufgabe an, eine bauraumoptimierte und kostengünstige Vorrichtung zur Herstellung von Butter aus Rahm zu schaffen.

Die Erfindung löst diese Aufgabe durch eine Vorrichtung mit den Merkmalen des Anspruchs 1. Durch die vollständige oder teilweise Anordnung des Butterungszylinders in der Nachbutterungstrommel kann eine platzsparende Dimensionierung der Butterungsmaschine erreicht werden. Zudem können durch die konstruktive Vereinfachung der Vorrichtung Herstellkosten verringert werden, insbesondere, da eine Verbindung zwischen dem Butterungszylinder und der Nachbutterungstrommel, ein Bauteil mit einem relativ hohen konstruktiven Aufwand, eingespart werden kann. Vorteilhafte Ausführungsvarianten der Erfindung sind Gegenstand der Unteransprüche.

Zur Vermeidung von Buttermilchspritzern und zum gezielten Abführen von Buttermilch und Butterkorn aus der Nachbutterungstrommel, ist dieser eine Haube zugeordnet, welche von einem Zuleitungsrohr für Buttermilch durchsetzt ist, welches in die Nachbutterungstrommel mündet. Durch dieses Zuleitungsrohr kann gekühlte Buttermilch in einen Nachbutterungsbereich der Nachbutterungstrommel geleitet werden, wo sie die Konsistenz der Buttermilch, vorteilhaft verbessert.

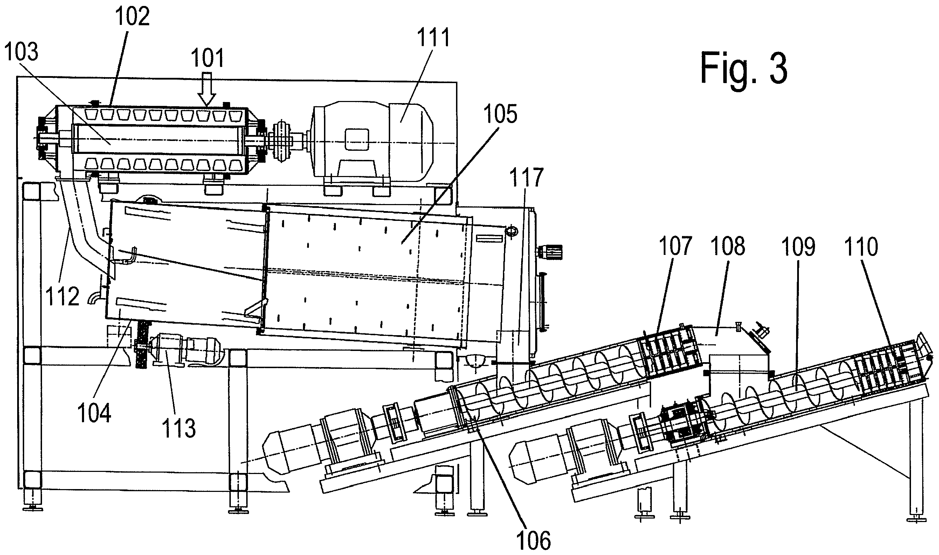

Das Vorgeben einer Transportrichtung innerhalb des Nachbutterungszylinders erfolgte bislang in herkömmlichen Butterungsmaschinen durch ein Anstellen der Nachbutterungstrommel um einige Grad (siehe Fig. 3). In einer bevorzugten Ausführungsvariante der erfindungsgemäßen Vorrichtung kann eine Vorgabe des Transportweges dadurch erreicht werden, dass der Nachbutterungszylinder konisch ausgebildet ist.

Vor der Beschreibung bevorzugter Ausführungsbeispiele sei angemerkt, dass nachfolgend einige bevorzugte Ausgestaltungen auch im Detail beschrieben werden, wobei die Erfindung aber nicht auf diese Ausgestaltungen beschränkt ist, sondern im Rahmen der Ansprüche beliebig variiert ausgestaltet werden kann. Insbesondere sind Begriffe wie "oben", "unten", "vorne" oder "hinten" nicht einschränkend zu verstehen, sondern beziehen sich lediglich auf die jeweils dargestellte Anordnung. Zudem sind, wenn einzelne Bestandteile erläutert werden, diese - wenn nicht anders erwähnt - grundsätzlich auch in mehrfacher Ausgestaltung denkbar. Unter den Schutzbereich fallen zudem auch funktionale Umkehrungen der dargestellten Anordnungen und Verfahren sowie äquivalente Ausgestaltungen.

Ein Ausführungsbeispiel der Erfindung wird im Folgenden anhand der beigefügten Figuren näher erläutert. Es zeigt:
- Fig. 1: eine schematische Darstellung eines Teilbereichs einer ersten Ausführung einer erfindungsgemäßen Butterungsmaschine,
- Fig. 2: eine schematische Darstellung eines Teilbereichs einer zweiten Ausführung einer erfindungsgemäßen Butterungsmaschine, und
- Fig. 3: eine schematische Darstellung einer Butterungsmaschine nach dem Stand der Technik, die nach dem Fritz/Eisenreich Verfahren betrieben wird.

Die in Fig. 3 abgebildete bekannte Butterungsmaschine wird nach dem Fritz-Eisenreich Verfahren betrieben.

Die Butterungsmaschine weist einen Butterungszylinder 102 mit einem Zulauf 101 für Rahm auf, sowie einen drehbar angeordneten Schläger 103, für die Bildung von Butterkorn und Buttermilch aus zugeführtem Rahm.

Anschließend wird das Butterkorn/Buttermilchgemisch über eine Verbindung 112 in eine Kühlsektion 104 einer Nachbutterungstrommel 105 überführt. In der Kühlsektion 104 erhält das Butterkorn eine festere und feinere Konsistenz und lässt sich anschließend besser weiter verarbeiten.

In der Nachbutterungstrommel 105 mit einem Antrieb 113 wird im Nachbutterungsprozess die optimale Butterkorngröße eingestellt und die Butter von der Buttermilch getrennt. Anschließend wird das Butterkorn über einen Schacht 117 in einen Abpresser 106 überführt.

Der Abpresser 106 wandelt das Butterkorn in eine homogene Buttermasse um und reduziert zusätzlich den Buttermilchgehalt der Butter.

In einer Mischzone 107 können zu der Butter Wasser, saure Kulturkonzentrate, Aroma-Kulturkonzentrate und Salzlake zudosiert werden, um den Geschmack und die Konsistenz der Butter zu optimieren.

In einer Vakuumkammer 108 wird der Butter Luft entzogen, um deren Schichtenbildung zu verhindern.

Ein weiterer Abpresser 109, sorgt zusammen mit einer sich daran anschließenden Mischzone 110 für eine gleichmäßige und feinere Verteilung der Flüssigkeit in der Butter. Mit einer vorzugsweise integrierten Austragspumpe wird der Ablauf der fertigen Butter aus der Maschine gewährleistet.

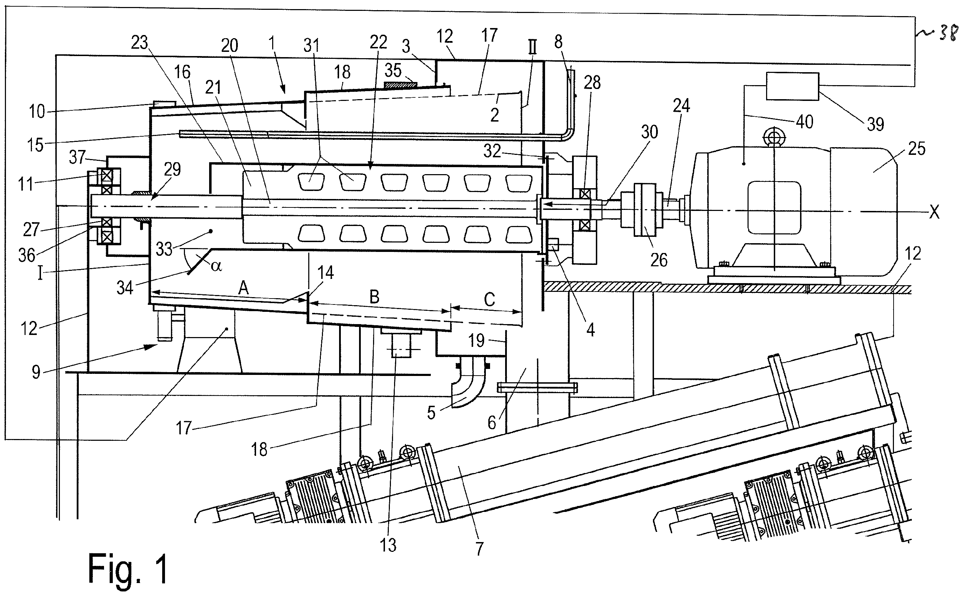

In Fig. 1 ist ein Teilbereich eines ersten Ausführungsbeispiels einer erfindungsgemäßen Butterungsmaschine dargestellt.

Eine Nachbutterungstrommel 1 weist einen drehbar gelagerten konischen Nachbutterungszylinder 2 und eine feststehende Haube 3 auf. In diesem Nachbutterungszylinder 2 ist in besonders kompakter Bauform der nicht drehbare Butterungszylinder 23 angeordnet, der wiederum einen drehbaren Schläger 22 aufweist.

Diese vorteilhafte kompakte Bauform wird hier durch eine Reihe von konstruktiven Maßnahmen erreicht, die nachfolgend detaillierter beschrieben werden sollen.

Die Haube 3 weist wiederum einen Zulauf 4 für Rahm, eine Ableitung 5 für Buttermilch, eine weitere Ableitung 6 zur Überleitung von Butterkorn in einen Abpresser 7 und ein Zuleitungsrohr 8 zur Zuleitung von gekühlter Buttermilch auf.

Der drehbar gelagerte Nachbutterungszylinder 2 wird durch einen Antrieb 9 über eine Getriebeverbindung 10 wie ein Umschlingungsgetriebe oder ein Zahnradgetriebe oder dgl. angetrieben, welches in der vorliegenden Ausführungsvariante an seinem Außenumfang des Nachbutterungszylinders angeordnet ist.

An einem Ende I ist der Nachbutterungszylinder 2 geschlossen. An einem gegenüberliegenden Ende II weist der Nachbutterungszylinder 2 aufgrund seiner Konizität einen größeren Durchmesser auf, ist endständig geöffnet und mündet in die Haube 3. Die Haube 3 ist mit dem Maschinengestell 12 verbunden.

Von besonderem Interesse ist die vorteilhafte Lagerung des Nachbutterungszylinders 2.

In Fig. 1 weist der Nachbutterungszylinder 2 an einem ersten axialen Ende I eine Hohlwelle 37 auf, welche mit einem ersten Lager 11 an einem zylindrischen Ansatz 36 eines Maschinengestells 12 drehbar gelagert ist. An dem Maschinengestell 12 sind zudem wenigstens eine oder mehr Laufrollen, hier zwei verstellbare Laufrollen 13 angeordnet, auf welchen der Nachbutterungszylinder 2 vor dem Übergang des Nachbutterungszylinders 2 in die Haube 3 an einer weiteren Stelle drehbar gelagert ist, wobei der Nachbutterungszylinder 2 gegenüber der Haube 3 abdichtend geführt ist.

Zum Ausgleich der Konizität ist am Außenumfang des Nachbutterungszylinders 2 eine Materialverstärkung 35 ausgebildet, auf welcher die Laufrollen 13 aufliegen.

Der Nachbutterungszylinder 2 ist in einen Nachbutterungsbereich A, einen Trennbereich B und einen Haubenübergangsbereich C unterteilt. Dabei sind der Nachbutterungsbereich A und Trennbereich B durch ein Ringwehr 14 voneinander getrennt, dessen Funktion weiter unten noch näher erläutert wird.

Der Nachbutterungsbereich A erstreckt sich von dem geschlossenen Ende I bis zu dem Ringwehr 14. Im Nachbutterungsbereich A ist ein Auslass 15 des Zuleitungsrohres 8 angeordnet, welches die Haube 3 durchsetzt und sich bis in den Nachbutterungsbereich A erstreckt und ein Zuführen von gekühlter Buttermilch in den Nachbutterungsbereich A unter geringem konstruktivem Aufwand ermöglicht.

Im Nachbutterungsbereich A sind am Innenumfang des Nachbutterungszylinders 2 mehrere Rippen 16 zur Nachbutterung angeordnet.

Von dem Ringwehr 14 ausgehend, erstreckt sich der Trennbereich B zumindest bis zu einer Stelle, an welcher der Nachbutterungszylinder 2 in die Haube 3 mündet.

Im Trennbereich B ist der drehbar gelagerte Nachbutterungszylinder 2 in einen hier inneren konisch geformten Siebmantel 17 und einen hier ebenfalls konisch geformten äußeren Gehäusemantel 18 zum Auffangen und Ableiten von Buttermilch unterteilt.

Der Gehäusemantel 18 erstreckt sich dabei über die gesamte Länge des Trennbereichs B und der Siebmantel 17 erstreckt sich sowohl über die gesamte Länge des Trennbereichs B als auch über den Haubenübergangsbereich C.

Der konische Gehäusemantel 18 erstreckt sich bis in die Haube 3, wo die abgetrennte Buttermilch in die Ableitung 5 läuft.

Der Siebmantel 17 leitet dagegen das auf dem Sieb verbleibende Butterkorn zu der weiteren Ableitung 6. Die Ableitungen 6 und 5 sind in der Haube 3 durch eine Trennwand 19 voneinander getrennt.

Nachfolgend sei nunmehr näher der Aufbau des Butterungszylinders 23 im Nachbutterungszylinder 2 beschrieben.

Der Butterungszylinder 23 weist eine drehbar gelagerte Schlägerwelle 20 mit einer Drehachse X auf, die den Butterungszylinder und die Nachbutterungstrommel 2 durchsetzt

Die Schlägerwelle 20 ist mit sich radial nach außen erstreckenden, umfangsverteilten Schlagblätter 21 versehen. Die Schlägerwelle 20 und die Schlagblätter 21 bilden einen Schläger 22 in dem nicht drehbaren Butterungszylinder 23. Die Schlagblätter 21 des Schlägers 22 weisen jeweils Öffnungen 31 auf.

Der Butterungszylinder 23 erstreckt sich konzentrisch zur Drehachse X des Nachbutterungszylinders 2 im Inneren der Nachbutterungstrommel 1.

Die Schlägerwelle 20 ist über eine Kupplung 26 mit einer Abtriebswelle 24 eines Antriebs bzw. des Antriebsmotors 25 gekoppelt.

Die Schlägerwelle 20 ist an ihren beiden axialen Enden mit Lagern 27 und 28 drehbar am Maschinengestell gelagert, wobei sie den Nachbutterungszylinder am Ende I im Bereich einer Öffnung 29 durchsetzt.

Das Lager 27 im Bereich der Öffnung 29 sitzt auf der Welle, wobei ein Lagergehäuse des Lagers 27 am Innenumfang des zylindrischen Ansatzes 36 des Maschinengestells 12 angreift.

Konzentrisch zum Lager 27 ist das Lager 11 angeordnet, welches die Lagerung des Nachbutterungszylinders 2 ermöglicht. Dieses Lager 11 sitzt zwischen dem zylindrischen Ansatz 36 des Maschinengestells 12 und der endständigen Hohlwelle 37 des Nachbutterungszylinders 2. Durch die konzentrische Anordnung der Lager 27 und 28 wird die kompakte Bauweise weiter optimiert.

In ihrem vorderen Bereich ist die Schlägerwelle 20 durch eine Öffnung 30 in der Haube 3 geführt. Der Butterungszylinder 23 erstreckt sich von der Haube 3 bis in den Nachbutterungsbereich A des Nachbutterungszylinders 2. Der Butterungszylinder 23 ist hierdurch eine Flanschverbindung 32 mit der Haube 3 der Nachbutterungstrommel 1 verbunden.

Ein in der Haube 3 vorgesehener Zulauf 4 für die Rahmzufuhr ist in einem Bereich zwischen der Flanschverbindung 32 und der Schlägerwelle 20 am Butterungszylinder 23 angeordnet.

Der Butterungszylinder 23 weist im Nachbutterungsbereich A an seinem einen Ende eine Öffnung 33 mit einem sich daran anschließenden Auslauf 34 auf. Dieser Auslauf ist hier beispielhaft und vorteilhaft als geführter Auslauf (z.B. als Blech) ausgebildet, welcher unter einem Anstellwinkel α von hier 45° zur Drehachse 23 ausgerichtet ist. Es wäre auch eines Ausführungsform mit einem nicht geführten Auslauf 34 denkbar.

Die weiteren Butterungsstufen der Butterungsmaschine, die sich an die Nachbutterungstrommel 1 anschließen, sind analog zu Fig. 3 angeordnet.

Die Arbeitsweise der vorstehend beschriebenen Butterungsmaschine ist wie folgt:

Der zu verbutternde Rahm wird über den Zulauf 4 in den in die Nachbutterungstrommel 1 integrierten Butterungszylinder 23 zugeführt.

Dabei wandelt der rotierende Schläger 22 den Rahm, also eine "Fett-in-Serum"-Emulsion, in Butter um. Dabei wird die Membranhülle der Fettkugeln im Rahm durch Scherkräfte zerstört, so dass eine "Serum-in-Fett"-Emulsion gebildet wird. Dadurch kann das Fett agglomerieren und das sogenannte Butterkorn bilden. Das Butterkorn gelangt dann mit dem Serum, der sogenannten Buttermilch, über die Öffnung 33 und den Auslauf 34 in den rotierenden Nachbutterungszylinder 2.

Im Nachbutterungsbereich A des Nachbutterungszylinder wird durch die Rippen 16 das Butterkorn weiter zu größeren Butterteilchen verarbeitet. Über das Zuleitungsrohr 8 kann gekühlte Buttermilch in den Nachbutterungsbereich A des Nachbutterungszylinders 2 geleitet werden und das aus dem feststehenden Butterungszylinder 23 austretende Butterkorn kühlen. Dadurch werden dem Butterkorn eine festere und feinere Konsistenz und eine gleichmäßigere Korngrößenverteilung verliehen.

Durch das Ringwehr 14 wird im Nachbutterungsbereich A ein Buttermilchsumpf gebildet, durch den die Verweilzeit der Buttermilch im Nachbutterungsbereich verlängert und die Butterfettausbeute erhöht wird. Außerdem werden Zulaufschwankungen durch den Buttermilchsumpf ausgeglichen und damit auch die Schwankungen im Endwassergehalt der Butter verringert. Zusätzlich wird das Butterkorn gekühlt.

Zur Vorgabe einer Transportrichtung für das Buttermilch/Butterkorngemisch in Richtung der Ableitungen 5 und 6 wurde die Nachbutterungstrommel bislang um einen Winkel von mehreren Grad angestellt (siehe Fig. 3). Dies ist in dieser Ausführungsvariante allerdings nicht mehr möglich, da die Lagerung sowohl der Nachbutterungstrommel 1 vorzugsweise ebenerdig sein sollte. Daher wird die Transportrichtung des Buttermilch/Butterkorngemisches im Nachbutterungszylinder 2 durch dessen konische Ausbildung vorgegeben.

Das über das Ringwehr 14 in den Trennbereich B fließende Gemisch aus Butterkorn und Buttermilch wird in einer dünnen Schicht über den Siebmantel 17 geleitet, wobei das Butterkorn von der Buttermilch getrennt wird. Über den rotierenden Gehäusemantel 18 fließt die Buttermilch zum Haubenübergangsbereich C und von dort über die Ableitung 5 aus der Butterungsmaschine zu einem nicht dargestellten Sammeltank ab. Die Zulaufflüssigkeit weist vorzugsweise einen Rahmgehalt von 50% auf. Ein Teil der abgetrennten Buttermilch kann auch gekühlt werden und entweder aus dem Sammeltank oder direkt nach der Abtrennung und Kühlung über das Zuleitungsrohr 8 zur Kühlung des Butterkorns in den Prozess zurückgeführt werden.

Somit erfolgen die wichtigsten Funktionsabläufe der Butterung, also die Phasenumkehr und die Abtrennung der Buttermilch nicht, wie bisher, in zwei räumlich voneinander getrennten Prozess-Stufen, sondern in einer einzigen, räumlich zusammengefassten Nachbutterungstrommel 1.

Die weiteren Prozess-Schritte angefangen von dem Kneten des Butterkorns durch den Abpresser 7, erfolgen analog zum Verfahren, wie es in Fig. 3 beschrieben ist.

Durch die getrennte Lagerung und den getrennten Antrieb des Schlägers 22 und des Nachbutterungszylinders 2 ist es möglich, diese beide rotierenden Teile mit unterschiedlicher Drehzahl zu betreiben.

Die Steuerung der Drehzahl des Nachbutterungszylinders erfolgt durch die Steuerung der Antriebsleistung des Antriebs 9 durch eine Steuereinheit 39. Die Steuereinheit 39 ist mit dem Antrieb 9 des Nachbutterungszylinders 2 beispielsweise durch eine Verbindungsleitung 38 und mit dem Antrieb 25 der Schlägerwelle 20 durch eine Verbindungsleitung 40 verbunden.

Die Steuerung der Drehzahl der Nachbutterungstrommel 2 und der Schlägerwelle 20 bzw. die Steuerung der zugehörigen Antriebe 9 und 25 kann durch die Steuereinheit 39 in vorteilhafter Weise getrennt voneinander erfolgen.

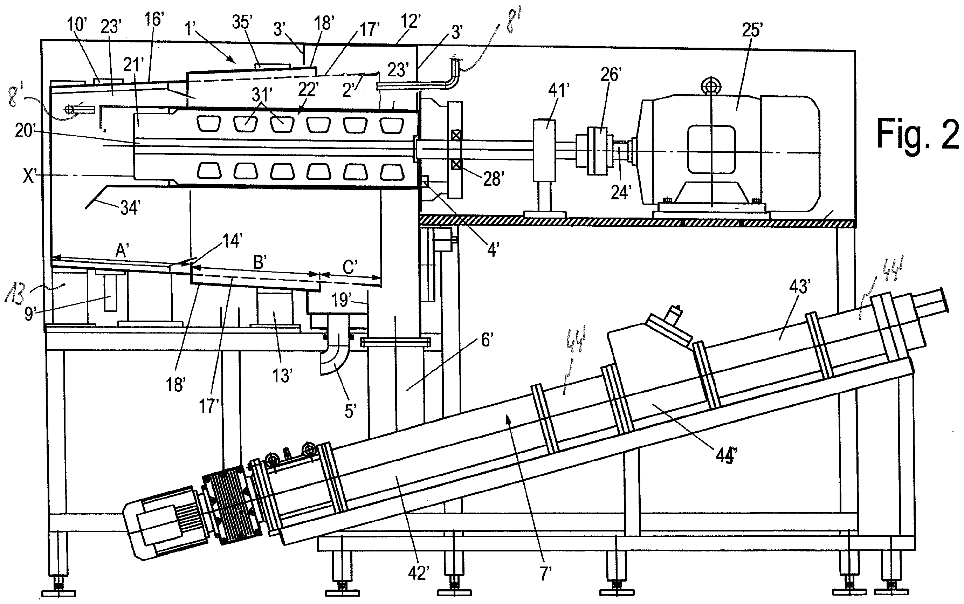

Fig. 2 zeigt ein zweites Ausführungsbeispiel einer erfindungsgemäßen Vorrichtung zur Herstellung von Butter, wobei einige der Bauteile analog zu Fig.1 angeordnet sind.

Dabei weist eine Nachbutterungstrommel 1', analog zu Fig. 1 einen drehbar gelagerten Nachbutterungszylinder 2', einen Siebmantel 17', einen Gehäusemantel 18' und eine Haube 3' auf. Der Nachbutterungszylinder 2' ist hierbei bevorzugt konisch ausgebildet.

Die Haube 3 weist wiederum ein en Zulauf 4' für Rahm, eine Ableitung 5' für Buttermilch, eine weitere Ableitung 6' zur Überleitung von Butterkorn in einen Abpresser 7' und ein Zuleitungsrohr 8' zur Zuleitung von gekühlter Buttermilch auf.

Der Nachbutterungszylinder 2' ist im vorderen und hinteren Bereich auf Laufrollen 13, 13' gelagert. Er wird durch einen Antrieb 9' und eine Getriebeverbindung 10' in Rotation versetzt..

In diesem Nachbutterungszylinder 2' ist ein nicht drehbarer Butterungszylinder 23' exzentrisch mit seiner Mittenachse zur Drehachse des Nachbutterungszylinders 2' angeordnet, welcher hier an der Haube 3' festgelegt ist. Die Haube 3' wird durch eine Schlägerwelle 20' durchsetzt, welche in dem Butterungszylinder 23' angeordnet ist und welcher über einen Kupplung 26' mit einem Antrieb 25' verbunden ist.

Die Schlägerwelle 20' ist einseitig mit einem Lager 28' an der Haube 3' gelagert. Es ist ferner wenigstens ein weiteres Lager 41' zwischen der Haube 3' und der Kupplung 26' angeordnet. Ein besonderer Vorteil dieser Variante im Vergleich zu Fig. 1 besteht darin, dass eine der beiden Abdichtungen an der Welle entfallen kann.
Nach einer alternativen Ausgestaltung wäre es denkbar, durch die einseitige Lagerung der Schlägerwelle 20' dem Nachbutterungszylinder zur Vorgabe eines Transportweges zusätzlich um einen Winkel von einigen Grad zu neigen.

Somit ist eine konische Form des Nachbutterungszylinders, wie bei der Ausführungsvariante in Fig. 1 nicht zwingend erforderlich.

Nach dem Abtrennen der Buttermilch vom Butterkorn im Nachbutterungszylinder 2', wird das Butterkorn in einen Abpresser 7' überführt.

Dieser Abpresser 7' umfasst zwei Abpresserstufen 42' und 43', zwischen welchen eine Mischzone 44' und ggf. eine Vakuumkammer 45' angeordnet ist. Der zweistufige Aufbau des kompakten Abpressers 7' macht einen weiteren Abpresser unnötig.

### Bezugszeichenliste

- 1, 1': Nachbutterungstrommel
- 2, 2': Nachbutterungszylinder
- 3, 3': Haube
- 4, 4': Zulauf
- 5: Ableitung
- 6: Ableitung
- 7, 7': Abpresser
- 8, 8': Zuleitungsrohr
- 9, 9': Antrieb
- 10, 10': Getriebemittel
- 11, 11': Lager
- 12, 12': Maschinengestell
- 13, 13': Laufrollen
- 14: Ringwehr
- 15: Auslass (Buttermilchkühlung)
- 16: Rippen
- 17, 17': Siebmantel
- 18, 18': Gehäusemantel
- 19: Trennwand
- 20, 20': Schlägerwelle
- 21: Schlagblätter
- 22: Schläger
- 23, 23': Butterungszylinder
- 24: Antriebswelle
- 25, 25': Antrieb
- 26, 26': Kupplung
- 27: Lager
- 28, 28': Lager
- 29: Öffnung
- 30: Öffnung
- 31: Öffnung
- 32: Flanschverbindung
- 33: Öffnung
- 34, 34': Auslauf
- 35: Materialverstärkung
- 36: zylindrischer Ansatz
- 37: Hohlwelle
- 38, 40: Verbindungsleitung
- 39: Steuereinheit
- 41': Lager
- 42', 43': Abpresserstufen
- 44': Mischzone
- 101: Zulauf
- 102: Butterungszylinder
- 103: Schläger
- 104: Kühlsektion
- 105: Nachbutterungstrommel
- 106: Abpresser
- 107: Mischzone
- 108: Vakuumkammer
- 109: Abpresser
- 110: Mischzone
- 112: Verbindung(srohr)
- 113: Antrieb
- 117: Schacht
- I: Seite
- II: Seite
- A: Nachbutterungsbereich
- B: Trennbereich
- C: Haubenübergangsbereich
- X, X': Drehachse
- α: Anstellwinkel

## Patentansprüche

1. Vorrichtung zur Herstellung von Butter aus Rahm mit zumindest einem Butterungszylinder (23, 23') zur Umwandlung von Rahm in Butterkorn und Buttermilch und einer Nachbutterungstrommel (1, 1') zur Trennung von Buttermilch und Butterkorn, der Butterungszylinder (23, 23') ganz oder zumindest teilweise in der Nachbutterungstrommel (1, 1') angeordnet ist, wobei die Nachbutterungstrommel (1, 1') und der Butterungszylinder (23, 23') eine bauliche Einheit bilden und wobei die Nachbutterungstrommel (1) den drehbar gelagerten Nachbutterungszylinder (2) mit einer Drehachse (X) aufweist und dass der Butterungszylinder (23) nicht drehbar im Nachbutterungszylinder (2) konzentrisch oder exzentrisch zur Drehachse (X) angeordnet ist, **dadurch gekennzeichnet, dass** der Nachbutterungszylinder (2) einen Nachbutterungsbereich (A) und einen Trennbereich (B) aufweist, die durch ein Ringwehr (14) voneinander getrennt sind, wobei sich - von dem Ringwehr (14) ausgehend - der Trennbereich (B) zumindest bis zu einer Stelle erstreckt, an welcher der Nachbutterungszylinder (2) in die Haube (3) mündet.

2. Vorrichtung nach Anspruch 1, **dadurch gekennzeichnet, dass** der Nachbutterungszylinder (2, 2') konisch ausgebildet ist.

3. Vorrichtung nach einem der vorhergehenden Ansprüche, **dadurch gekennzeichnet, dass** der Butterungszylinder (23, 23') einen spitzwinklig angestellten Auslauf (34, 34') zum Überführen von Butterkorn und Buttermilch vom Butterungszylinder (23, 23') in den Nachbutterungsbereich (A, A') des Nachbutterungszylinders (2, 2') aufweist.

4. Vorrichtung nach einem der vorhergehenden Ansprüche, **dadurch gekennzeichnet, dass** die Nachbutterungstrommel (1, 1') eine feststehende Haube (3, 3') mit einem Zulauf (4, 4') zum Einleiten von Rahm in den Butterungszylinder (23, 23') aufweist.

5. Vorrichtung nach einem der vorhergehenden Ansprüche, **dadurch gekennzeichnet, dass** der Butterungszylinder (23, 23') an der Haube (3, 3') oder an einem Maschinengestell (12, 12') befestigt ist.

6. Vorrichtung nach einem der vorhergehenden Ansprüche, **dadurch gekennzeichnet, dass** die Haube (3) von einem Zuleitungsrohr (8) für Buttermilch durchsetzt ist.

7. Vorrichtung, nach einem der vorhergehenden Ansprüche, **dadurch gekennzeichnet, dass** der Butterungszylinder (23) einen Schläger (22) mit einer Schlägerwelle (20) aufweist, welche den Butterungszylinder (23) und die Nachbutterungszylinder (2) durchsetzt und welche an ihren Enden mit Lagern (27, 28) drehbar gelagert ist.

8. Vorrichtung nach einem der vorhergehenden Ansprüche, **dadurch gekennzeichnet, dass** die Schlägerwelle (20) des Schlägers (22) den Nachbutterungszylinder (2) und die Haube (3) durchsetzt.

9. Vorrichtung nach einem der vorhergehenden Ansprüche, **dadurch gekennzeichnet, dass** der Nachbutterungszylinder (2) an seinem einen axialen Ende (I) mit einem Wälzlager (27) und an einem Außenumfang in einem konischen Bereich der Nachbutterungstrommel (2) durch Laufrollen (13) drehbar gelagert ist.

10. Vorrichtung nach einem der vorhergehenden Ansprüche, **dadurch gekennzeichnet, dass** die Schlägerwelle (20) und der Nachbutterungszyliner (2, 2') jeweils über separate Antriebe (9, 9', 25, 25') getrieben werden.

11. Vorrichtung nach einem der vorhergehenden Ansprüche, **dadurch gekennzeichnet, dass** der Antrieb (25, 25') der Schlägerwelle (20, 20') in axialer Verlängerung zur Schlägerwelle (20, 20') außerhalb der Nachbutterungstrommel (1, 1') angeordnet ist.

12. Vorrichtung nach einem der Ansprüche 1-7, **dadurch gekennzeichnet, dass** der Butterungszylinder (23') einen Schläger (22') mit einer Schlägerwelle (20') aufweist, welche den Butterungszylinder (23') und die Nachbutterungszylinder (2') durchsetzt und vorzugsweise einseitig gelagert ist.

## Claims

1. A device for producing butter from cream having at least one churning cylinder (23, 23') for converting cream into butter grain and buttermilk, and an after-churning drum (1, 1') for separating buttermilk and butter grain, wherein the after-churning drum (1, 1') and the churning cylinder (23, 23') form one structural unit, and wherein the after-churning drum (1) has the rotatably mounted after-churning cylinder (2) with a rotational axis (X) and that the churning cylinder (23) is arranged non-rotatably in the after-churning cylinder (2) concentrically relative to the rotational axis (X), **characterized in that** the after-churning cylinder (2) has an after-churning area (A) and a separating area (B) which are separated from each other by a ring weir (14), wherein the separating area (1B) extends, originating from the ring weir (14), at least up to a point where the after-churning cylinder (2) opens into the cover (3).

2. The device as claimed in claim 1, **characterized in that** the after-churning cylinder (2, 2') is formed conically.

3. The device as claimed in one of the preceding claims, **characterized in that** the churning cylinder (23, 23') has an outlet (34, 34') positioned at an acute angle for transferring butter grain and buttermilk from the churning cylinder (23, 23') into an after-churning area (A, A') of the after-churning cylinder (2, 2').

4. The device as claimed in one of the preceding claims, **characterized in that** the after-churning drum (1, 1') has a fixed cover (3, 3'), with a supply inlet (4, 4') for introducing cream into the churning cylinder (23, 23').

5. The device as claimed in one of the preceding claims, **characterized in that** the churning cylinder (23, 23') is fixed on the cover (3, 3') or on a machine frame (12, 12').

6. The device as claimed in one of the preceding claims, **characterized in that** the cover (3) is penetrated by a supply pipe (8) for buttermilk.

7. The device as claimed in one of the preceding claims, **characterized in that** the churning cylinder (23) has a beater (22) with a beater shaft (20) which passes through the churning cylinder (23) and the after-churning cylinder (2) and is mounted rotatably at its ends by bearings (27, 28).

8. The device as claimed in one of the preceding claims, **characterized in that** the beater shaft (20) of the beater (22) passes through the after-churning cylinder (2) and the cover (3).

9. The device as claimed in one of the preceding claims, **characterized in that** the after-churning cylinder (2) is mounted rotatably at its one axial end (I) with a rolling bearing (27) and at an outer periphery in a conical area of the after-churning drum (2) by rollers (13).

10. The device as claimed in one of the preceding claims, **characterized in that** the beater shaft (20) and the after-churning drum (2, 2') are each operated by separate drives (9, 9', 25, 25').

11. The device as claimed in one of the preceding claims, **characterized in that** the drive (25, 25') of the beater shaft (20, 20') is arranged in an axial extension to the beater shaft (20, 20') outside of the after-churning drum (1, 1').

12. The device as claimed in one of claims 1 to 7, **characterized in that** the churning cylinder (23') has a beater (22') with a beater shaft (20') which passes through the churning cylinder (23') and the after-churning cylinder (2') and is mounted preferably on one side.

## Revendications

1. Dispositif pour fabriquer du beurre à partir de crème, comprenant au moins un cylindre de baratte (23, 23') pour transformer la crème en grains de beurre et en babeurre et un tambour de post-barattage (1, 1') pour séparer le babeurre et les grains de beurre, dans lequel le cylindre de baratte (23, 23') est entièrement ou au moins en partie disposé dans le tambour de post-barattage (1, 1'), le tambour de post-barattage (1, 1') et le cylindre de baratte (23, 23') formant une unité de construction et le tambour de post-barattage (1) comprenant le cylindre de post-barattage (2) supporté avec possibilité de rotation avec un axe de rotation (X), et dans lequel le cylindre de baratte (23) est disposé sans possibilité de rotation dans le cylindre de post-barattage (2) de façon concentrique ou excentrique par rapport à l'axe de rotation (X), **caractérisé en ce que** le cylindre de post-barattage (2) présente une zone de post-barattage (A) et une zone de séparation (B) séparées l'une de l'autre par un barrage annulaire (14), la zone de séparation (B) s'étendant, à partir du barrage annulaire (14), au moins jusqu'à un endroit où le cylindre de post-barattage (2) débouche dans le capot (3).

2. Dispositif selon la revendication 1, **caractérisé en ce que** le cylindre de post-barattage (2, 2') a une forme conique.

3. Dispositif selon l'une des revendications précédentes, **caractérisé en ce que** le cylindre de baratte (23, 23') présente un écoulement (34, 34') monté à angle aigu pour transférer les grains de beurre et le babeurre du cylindre de baratte (23, 23') à la zone de post-barattage (A, A') du cylindre de post-barattage (2, 2').

4. Dispositif selon l'une des revendications précédentes, **caractérisé en ce que** le tambour de post-barattage (1, 1') présente un capot fixe (3, 3') avec une arrivée (4, 4') pour introduire de la crème dans le cylindre de baratte (23, 23').

5. Dispositif selon l'une des revendications précédentes, **caractérisé en ce que** le cylindre de baratte (23, 23') est fixé sur le capot (3, 3') ou sur un bâti de machine (12, 12').

6. Dispositif selon l'une des revendications précédentes, **caractérisé en ce que** le capot (3) est traversé par un tuyau d'arrivée (8) pour le babeurre.

7. Dispositif selon l'une des revendications précédentes, **caractérisé en ce que** le cylindre de baratte (23) présente un batteur (22) avec un arbre de batteur (20) qui traverse le cylindre de baratte (23) et le cylindre de post-barattage (2) et qui est supporté à ses extrémités avec possibilité de rotation avec des paliers (27, 28).

8. Dispositif selon l'une des revendications précédentes, **caractérisé en ce que** l'arbre de batteur (20) du batteur (22) traverse le cylindre de post-barattage (2) et le capot (3).

9. Dispositif selon l'une des revendications précédentes, **caractérisé en ce que** le cylindre de post-barattage (2) est supporté avec possibilité de rotation à son extrémité axiale (I) avec un roulement (27) et sur une circonférence extérieure, dans une zone conique du tambour de post-barattage (2), par des galets (13).

10. Dispositif selon l'une des revendications précédentes, **caractérisé en ce que** l'arbre de batteur (20) et le cylindre de post-barattage (2, 2') sont entraînés chacun par des entraînements (9, 9', 25, 25') séparés.

11. Dispositif selon l'une des revendications précédentes, **caractérisé en ce que** l'entraînement (25, 25') de l'arbre de batteur (20, 20') est disposé dans le prolongement axial de l'arbre de batteur (20, 20') à l'extérieur du tambour de post-barattage (1, 1').

12. Dispositif selon l'une des revendications 1 à 7, **caractérisé en ce que** le cylindre de baratte (23') présente un batteur (22') avec un arbre de batteur (20') qui traverse le cylindre de baratte (23') et le cylindre de post-barattage (2') et qui est de préférence supporté d'un côté.
